# EUROPÄISCHE PATENTANMELDUNG

(11) **EP 2 090 552 A2**
(43) Veröffentlichungstag der Anmeldung: **19.08.2009**
(21) Anmeldenummer: 08020353.2
(22) Anmeldetag: 22.11.2008
(51) Int. Cl.: C04B 18/02, C04B 24/00, C04B 28/02

(54) **Zusatzmittel für zementgebundene mineralische Baustoffe, insbesondere für Estriche**

(30) Priorität: 16.01.2008 DE 102008004758
(71) Anmelder: Thomas, Tanja, 31840 Hessisch Oldendorf (DE)
(72) Erfinder: Mertens, Antonius, 31840 Hessisch Oldendorf (DE)
(74) Vertreter: Flosdorff, Jürgen

(57) **Zusammenfassung**

Die Verwendung eines Zusatzmittels für mit Zement oder Kalk gebundene mineralische Baustoffe wie Estrich, Beton, Putz, Spachtelmasse etc., das dem Anmachwasser beigemischt wird, ist **dadurch gekennzeichnet, dass** es eine fermentierte EM (Effektive Mikroorganismen nach Prof. Dr. Teruo Higa) enthaltende Lösung aufweist. Die aus dem Anmachwasser und dem zugegebenen EM-Zusatzmittel gebildete flüssige Mischung bewirkt nach Durchmischung des Sandes mit dem Zement und dem Anmachwasser, dass sich innerhalb der ersten Hydratationsphase des Zementes CO₂ bildet, welches das Überschusswasser heraustreibt. Die Trocknung tritt sehr schnell ein, wobei eine verlegte Estrichfläche praktisch keiner Verformung unterliegt. Die Trocknungsspannungen sind so gering, das wesentlich größere Flächen in einem zusammenhängenden Bereich ausgeführt werden können.

## Beschreibung

Die Erfindung betrifft ein Zusatzmittel für mit Zement oder Kalk gebundene mineralische Baustoffe wie Beton, Estrich, Putz und Spachtelmasse, wobei das Zusatzmittel dem Anmachwasser dieser mineralischen Baustoffe beigemischt wird.

Alle zementgebundenen oder kalkgebundenen Materialien müssen mit einer Überschussmenge an Wasser gemischt werden, damit sie verarbeitbar sind. Von der zugegebenen Menge Wasser benötigt der Zement einen Anteil von ca. 30% zur chemischen Bindung und Verfestigung. Der Rest des Wassers wird in Poren gelagert und von der Umgebungsluft an der Estrich- oder beispielsweise Betonoberfläche an die Raumluft abgegeben. Dies kann man so betrachten, dass die Trocknung des aushärtenden mineralischen Baustoffs bei einer Bodenschicht von oben nach unten und beispielsweise bei einer Wand von außen nach innen erfolgt. Durch den langwierigen Trocknungsprozess bauen sich Zugspannungen innerhalb des Gefüges auf, und die obere Randzone des Estrichs oder Betons trocknet schneller aus als der untere Schichtbereich, (wobei dies bei einer Wand oder Stütze entsprechend von außen nach innen erfolgt).

Dies hat zur Folge, dass die Oberflächen dazu neigen, dass sie sich konvex verformen, dass das sogenannte Schüsseln eintritt und es zu Verwölbungen kommt. Diese Verwölbungen bilden sich nach ca. 30 bis 40 Tagen zurück. Bis zu diesem Zeitpunkt können Bodenbeläge nicht verlegt werden, da sich diese dann zurückverformen müssten. Selbst nach ca. 2 Jahren senken sich Bodenkonstruktionen im Bereich der Sockelfuge (Silikonfuge) noch um ca. 5 Millimeter ab, weshalb die elastische Fuge dann neu verfugt werden muss. Da alle diese Systeme von oben nach unten trocknen, nimmt die Trocknungszeit ca. 28 bis 40 Tage, je nach Witterung, in Anspruch.

Der vorliegenden Erfindung liegt die Aufgabe zugrunde, für dieses Problem eine Lösung zu finden.

Diese Aufgabe wird erfindungsgemäß durch die Merkmale der Patentansprüche 1, 7 und 8 gelöst.

Vorteilhafte Ausgestaltungen der Erfindung sind in den Unteransprüchen gekennzeichnet.

Die Erfindung sieht ein Zusatzmittel für das Anmachwasser des Estrichs, Betons oder dergleichen vor, das die Wirkung hat, dass die Estrichschicht oder Betonschicht von unten nach oben trocknet. Bei einer vertikalen Schicht oder einer Wand oder einer Stütze erfolgt die Trocknung entsprechend von innen nach außen.

Bei dem Zusatzmittel handelt es sich um EM (Effektive Mikroorganismen, nach Professor Dr. Teruo Higa), das beipielsweise von der Firma Emiko in Deutschland hergestellt und vertrieben wird. Bevorzugt wird EM1 verwendet, und zwar im fermentierten Zustand. Die Fermentierung erfolgt bevorzugt dadurch, dass 3 Gewichtsanteile Zuckerrohrmelasse, 3 Gewichtsanteile EM1 und 94 Gewichtsanteile energetisiertes Wasser, bei dem die Clusterstrukturen aufgebrochen und die Oberfläche vergrößert ist, gemischt und 7 Tage lang unter Ausgasung von CO₂ bei 32°C - 37°C gehalten werden. Es kann auch unbehandeltes Wasser verwendet werden.

Das Zusatzmittel besteht aus einer flüssigen koloidalen fermentierten Lösung bevorzugt auf der Basis von Milchsäuren und/oder Obstsäuren und Solsalzen sowie in gebranntem Ton befindlichen Mikroorganismen als Informationsträger für das Anmachwasser. Die EM-Information wird auf das Wasser übertragen und bewirkt - so ist anzunehmen - eine Vergrößerung der Clusterstrukturen des Wassers, die wiederum dazu führen, dass sich die Oberfläche des Wassers sehr stark vergrößert und damit dem Zement eine größere Menge Wasser vorgespielt wird, oder anders ausgedrückt: Es tritt eine Art Hochverflüssigung ein.

Die aus dem Anmachwasser und dem zugegebenen EM-Zusatzmittel gebildete flüssige Mischung bewirkt nach Durchmischung des Sandes mit dem Zement und dem Anmachwasser, dass sich innerhalb der ersten Hydratationsphase des Zementes, also dann, wenn der Zement den für ihn nötigen Wassergehalt absorbiert hat, CO₂ bildet, welches - so wird angenommen - das Überschusswasser heraustreibt. Dieses Überschusswasser hat keinerlei Funktion mehr. Der vorher von dem Zement gebundene Wasseranteil hat keinerlei Auswirkung auf die Verformung des Estrichs (oder Betons etc.). Dieser Wasseranteil wird zur Erhärtung des Zementleimes benötigt, womit sich Zementstein bildet, der die Sandkörner miteinander verfestigt.

Erfindungsgemäß tritt nur ein geringes Schwinden auf. Ein Estrich kann sich, wie oben beschrieben, nur dann verformen, wenn durch die langsame Entweichung des Wassers (Trocknung von oben nach unten) die Zug- und sonstigen Spannungszonen während der Trocknung unterschiedliche Festigkeiten aufweisen und es somit zu unkontrollierten Spannungen zwischen dem schon fast trockenen Bereich und den noch feuchten Bereichen kommt. Die Folge hiervon ist, dass es zu Rissen und Deformierungen kommt. Die Erfindung führt zu einer schnellen Trocknung des Estrichs in nur 4 bis 6 Tagen bei einer Einbaudicke von ca. 7 cm Estrich und damit zu einer weitaus schnelleren Belegbarkeit für alle Bodenbeläge.

Das Zusatzmittel enthält nur natürliche fermentierte Materialien und hat als Lösung einen PH-Wert von 3 bis 3,5. Es ist flüssig, dunkelbraun, hat einen säuerlichen Geruch und eine Dichte von ca. 1 Gramm/Kubikzentimeter. Das Zusatzmittel ist biologisch abbaubar und führt zu Festigkeitswerten der mineralisch gebundenen Materialien wie Putz, Estrich, Beton und Spachtelmassen, die alle in den entsprechenden Normen geforderten Werten und den beim Stand der Technik erreichten Werten überlegen sind.

Da die Trocknung so schnell eintritt, tritt bei einer Estrichschicht die bisher anzutreffende konvexe Verformung erst gar nicht ein. Die verlegte Estrichfläche unterliegt damit praktisch keiner Verformung. Die Trocknungsspannungen sind so gering, dass wesentlich größere Flächen in einer zusammenhängenden Fläche ausgeführt werden können. Das Zusatzmittel bewirkt zudem eine höhere Korrosionsbeständigkeit des Baustahls, worauf besonders hinzuweisen ist.

Das Zusatzmittel wird in flüssiger Form dem Anmachwasser in einer Beimischung von bevorzugt einem Liter auf 200 Liter Anmachwasser zugegeben. Das Zusatzmittel wird in dem Anmachwasser verteilt und mit diesem in die Sand-Zementmischung eingemischt, woraufhin diese verarbeitet wird.

Das Zusatzmittel hat sich auch bei Lehmputz besonders gut bewährt.

Es wird betont, dass die Erfindung nicht auf die beschriebenen Ausführungsformen beschränkt ist. Vielmehr sind alle offenbarten Merkmale auf jede Weise einzeln miteinander kombinierbar.

## Patentansprüche

1. Verwendung eines Zusatzmittels für mit Zement oder Kalk gebundene mineralische Baustoffe wie Estrich, Beton, Putz, Spachtelmasse etc., wobei das Zusatzmittel dem Anmachwasser beigemischt wird,
**dadurch gekennzeichnet,**
**dass** das Zusatzmittel eine fermentierte EM (Effektive Mikroorganismen nach Prof. Dr. Teruo Higa) enthaltende Lösung aufweist.

2. Verwendung eines Zusatzmittels nach Anspruch 1,
**dadurch gekennzeichnet,**
**dass** das EM-Zusatzmittel fein gemahlenen gebrannten Ton enthält, in den Effektive Mikroorganismen eingebrannt sind.

3. Verwendung eines Zusatzmittels nach einem der Ansprüche 1 oder 2,
**dadurch gekennzeichnet,**
**dass** das EM-Zusatzmittel ferner
wenigstens eine Milchsäure und/oder wenigstens eine Obstsäure und wenigstens ein Solsalz enthält.

4. Verwendung eines Zusatzmittels nach einem der Ansprüche 1 - 3,
**dadurch gekennzeichnet,**
**dass** als EM-Zusatzmittel EM1 (erhältlich von der deutschen Firma Emiko) verwendet wird, das zuvor zu EMA fermentiert wird.

5. Verwendung eines Zusatzmittels nach einem der Ansprüche 1 - 4,
**dadurch gekennzeichnet,**
**dass** das EM-Zusatzmittel einen PH-Wert zwischen 3 und 3,5 hat.

6. Verwendung eines Zusatzmittels nach einem der Ansprüche 1 - 5,
**dadurch gekennzeichnet,**
**dass** das EM-Zusatzmittel in einer Menge von ca. 0,5 Volumenprozent (1 Liter/200 Liter) dem Anmachwasser zugegeben wird.

7. Verarbeitungsfähige Zement oder Kalk enthaltende Baustoffmasse wie Estrich, Beton, Putz, Spachtelmasse etc.,
**dadurch gekennzeichnet,**
**dass** dem Anmachwasser der Baustoffmasse ein Zusatzmittel nach einem der Ansprüche 1 bis 6 beigemischt ist.

8. Fußbodenheizungsanordnung mit einer oberen Estrichschicht,
**dadurch gekennzeichnet,**
**dass** der Estrich ein Zusatzmittel nach einem der Ansprüche 1 bis 6 aufweist.
